# EUROPEAN PATENT APPLICATION

(11) **EP 1 998 508 A1**
(43) Date of publication of application: **03.12.2008**
(21) Application number: 07252209.7
(22) Date of filing: 31.05.2007
(51) Int. Cl.: H04L 12/56

(54) **Communications traffic admission**

(71) Applicant: British Telecommunications Public Limited Company, London EC1A 7AJ (GB)
(72) Inventor: The designation of the inventor has not yet been filed
(74) Representative: Williamson, Simeon Paul

(57) **Abstract**

Apparatus for admitting or refusing a request for transmission on a communications channel, the request made by a call having a minimum bandwidth rate, the apparatus including
- identifying means for identifying a bandwidth rate at which the call may be admitted at a time when the request is made by the call,
- determining means for determining a transmission period required for transmission of the call,
- varying means for varying the identified bandwidth rate based on anticipated capacity in the communications channel over the transmission period, and
- admission means for admitting the call at the varied bandwidth rate.

## Description

This invention relates to methods, apparatus and systems for communications traffic prioritisation, admission and management in a network, particularly the admission of traffic of a variety of priorities at a particular node to a communications channel within a communications network, and the manner in which such traffic is allowed access or admission to the network.

Admission control issues in communications networks are the topic of Call (or Connection) Admission Control (CAC). CAC is a Quality of Service (QoS) system developed to address the levels of service expected by communications network operators agreed with their end user customers. In an oversubscribed connectionless network, data packets may be queued, buffered or otherwise delayed or even dropped to relieve congestion. Such solutions cannot be used with real-time traffic such as voice (e.g. Voice over IP or VolP) or video (e.g. Internet Protocol Television or IPTV) which are sensitive to both packet loss and latency. In this description, "high", "higher", "low", or "lower" priority calls take the meaning ascribed to them in the applicable QoS requirements - which is typically determined by the call's tolerance of latency and the like. Thus real-time calls such as voice or video traffic are typically treated as higher priority traffic than e.g. file transfer and retrieval traffic.

Unlike traditional circuit-switched networks, a packet-switched network will admit real-time calls even in a congested network. This may result in packet drops and unacceptable delays for the newly admitted call, and may also adversely affect the transmission quality of existing traffic. Thus, where there are insufficient resources to set up an end-to-end connection, it may be better to completely deny network access to new traffic, akin to what happens in a circuit-switched network operating at or near maximum capacity.

To maintain connections at acceptable QoS levels in a cost-efficient manner, the base station or access node should be able to maximise the number of connections admitted to the network while minimising handoff call drops. Bandwidth should be used efficiently, with minimal latency and overheads of both the call admission and handover computations.

Admission control methods are thus preventative measures which keep excess traffic off a network by preventing the creation of new circuits during the call set-up (or call re-negotiation) phase i.e. before the call is made. The decision to accept or reject is based in the main on whether the required network resources are available to establish the required connection to the required QoS level.

For the purposes of this description, a "call" (or interchangeably, a "connection", "traffic", or "packet(s)") refers to the transmission or flow of traffic such as video or voice over the network, and here includes the attempt to transmit or initiate a voice, video or data transfer or flow.

With increasing pressure on communication networks to provide complex and integrated services such as voice, data and multimedia services via different access networks, often with differing QoS requirements, network operator anxiety about delivering to customer expectations is ever growing. For time-sensitive traffic therefore, CAC is a key tool in the aim for efficient network resource management, in particular bandwidth allocation, for such traffic having different QoS parameters.

There are currently a number of CAC systems known in the art, which address different aspects of the call admission problem. A known approach is based on assessing bandwidth capacity to gauge the state of the network in coming to a decision about whether to admit a call. Generally, "bandwidth" is the rate in bits per second at which a node (which term in this description may without limitation refer also to "link", "switch" or "router" as the context permits) of the communications network is served; bandwidth is also sometimes referred to as "service capacity" or "link rate". Bandwidth allocation schemes can be classed depending on whether they employ a fixed or an adaptive approach.

In the fixed approach (described e.g. in SL Ng, S Hoh, D Singh, FL Lim, D Wisely and M Singaram "End-to-end Based QoS Provisioning in All-IP Network" IEEE International Conference on Wireless Communications, Networking and Mobile Computing, September 23-26, 2005, Wuhan, China), a pre-determined percentage of the available network resources is reserved by the operator for call connections and handoffs for a specified time duration. This percentage is usually selected by reference to e.g. historical logged data to make projections of future demand to certain QoS requirements, using e.g. predictive algorithms. However, static data of network conditions can quickly become obsolete unless manually refreshed by the network operator. The main disadvantages of such an approach are the possibility of over- or under-provision, inflexibility in a dynamic network carrying a variety of call types, and lack of scalability.

In an adaptive allocation scheme, resources are managed in an ongoing fashion to admit calls by reference to actual current and future network conditions. Such network conditions can be based on historical data values obtained from past network conditions at e.g. a certain time of day. Alternatively the network conditions can be observed and calculated "online" or on the fly. This could result in greater efficiencies, compared to a fixed scheme, but as decisions about call admission and bandwidth allocation are made on the fly, much computational time is needed to support real-time reactions to changing network conditions. This could add to the admission latency levels already suffered by such real-time traffic, given the processing that needs to be done prior to admission. In practice, such schemes often operate at suboptimal performance levels.

A specific problem continues to exist when the network is operating at or near full capacity and so may be overloaded. Here, a higher priority call seeks to be admitted to the network but cannot be accommodated on account of other, perhaps lower priority calls already in progress and taking up resources.

There are various ways to deal with admission of higher priority traffic. First, traffic is routed based on their types to different access point for different class of services. For example, voice over IP (VoIP) traffic is redirected to access point 1, web browsing and contents downloading requests are redirected to access point 2 etc. The second way is to reduce the bandwidth rate of existing lower-priority calls or terminate these lower-priority calls and reallocate the bandwidth thus freed up, to admit the higher priority call. This can be performed by using a loop to check through each lower priority call and reduce the bandwidth. Bandwidth obtained this way is accumulated and checked against the minimum bandwidth requirements of the new higher-priority call. The reduction-and-reallocation process continues until the accumulated bandwidth is greater than or equal to the minimum bandwidth required by the new call. When this requirement is met, the reallocation process stops and the new call is admitted with the accumulated bandwidth rate. If the bandwidth rate of the lower-priority call cannot be reduced any further without terminating the call, and if there is still insufficient bandwidth to meet the minimum requirements of the new high-priority call (e.g. when the system is operating near capacity) the system will start terminating each lower-priority call until sufficient bandwidth is accumulated to serve the new call.

These methods are described in e.g. F Prihandoko, MH Habaebi, and BM Ali "Adaptive Call Admission Control for QoS Provisioning in Multimedia Wireless Networks" Computer Communication, Elsevier, vol. 26, pp. 1560-1569, 2003, and A Malla, M El-Kadi, S Olariu, and P Todorova "A fair resource allocation protocol for multimedia wireless networks" IEEE Transaction on Parallel and Distributed Systems, vol. 14, no. 1, 2003. These methods can work if sufficient extra bandwidth could be freed up after a single one loop (i.e. when the network is not highly overloaded). However if a number of rounds of checking through each non real-time call are required, the repetitions cause delay and add to network overheads whenever such reallocation takes place, resulting in the new call dropping.

Another strategy is described in Sungwook Kim and Pramod K. Varshney "Adaptive Load Balancing with Preemption for Multimedia Cellular Networks", IEEE Wireless Communications and Networking Conference (WCNC), vol.3 pp. 1680-1684, March, 2003. Here again however, the preemption and bandwidth reduction is performed at run time, creating computational overhead and potentially disrupting the performance of the ongoing calls.

There is therefore a need for an approach which is more time- and resource-efficient which reduces the negative impact of the bandwidth reallocation of lower-priority calls when a higher-priority call seeks admission at the base station or the node.

According to a first aspect of the invention, there is provided apparatus for admitting or refusing a request for transmission on a communications channel, the request made by a call having a minimum bandwidth rate, the apparatus including
- identifying means for identifying a bandwidth rate at which the call may be admitted at a time when the request is made by the call,
- determining means for determining a transmission period required for transmission of the call,
- varying means for varying the identified bandwidth rate based on anticipated capacity in the communications channel over the transmission period, and
- admission means for admitting the call at the varied bandwidth rate.
   The invention allows for calls to be admitted at bandwidth rates in a manner which optimises network resource use, which accommodates as many calls as is possible in a manner which does not disrupt the progress of ongoing calls already admitted to the network. This is achieved by determining not only the capacity of the communications channel or network at the time when the call is seeking admission, but also the projected or anticipated capacity after the call is notionally admitted. By proactively adjusting bandwidth initially allocated to the new call seeking admission, before the new call is admitted to the network, there is less likely to be any need for resource-hungry and disruptive adjustments to the bandwidth of the admitted call. By looking ahead for at least the expected transmission duration of the new call, the CAC system of the invention can reduce the bandwidth initially thought to be suitable for the call (based on e.g. its call type) in the case where further traffic levels are expected while the new call, if admitted, is in progress. Conversely, when little additional traffic is expected after admission of the new call is expected, the new call can have its initially-allocated bandwidth rate increased so as to make full use of available network resources. Where the network is so congested so that no space capacity is available to accommodate the call, the system can either refuse the new call admission completely, or in one embodiment bandwidth can be taken from existing, ongoing calls already on the network, to free up capacity or bandwidth to admit the new call.
   In preferred embodiments, the CAC system refers to historical data to assess or predict the likely traffic levels for at least the period during which the new call will be in transmission. Such historical data can comprise static data, or data which is periodically updated. In a preferred embodiment, the historical data is obtained from a CAC system wherein the computationally intensive work of logging information about call admission and traffic levels at a particular time of day is done "offline".
   In further embodiments, the network operator is able to fine-tune the CAC system according to various administration policies and in response to various network conditions, by using a number of adjustable parameters which determine initially-allocated values, how they are adjusted, by how much, at what rate, and so on.
   According to a second aspect of the invention, there is provided a module for reallocating bandwidth to a new call requesting transmission at a required bandwidth rate to a communications channel, the communications channel having a bandwidth capacity of which a portion is occupied by an existing call, the remaining free bandwidth capacity being insufficient to accommodate the new call at the required bandwidth rate, the apparatus including
- calculating means to calculating a shortfall amount being a difference between the free bandwidth capacity and the required bandwidth rate,
- reduction means for obtaining the shortfall amount by making a single reduction of the bandwidth occupied by the existing call by the shortfall amount, and
- reallocation means for allocating the shortfall amount to the new call.
   This aspect of the invention is mostly usefully deployed with the communications channel or network is so congested that the new call cannot be accommodated even at a reduced bandwidth rate. Here, the module performs an upfront calculation of the total shortfall of bandwidth required to admit the new call. The shortfall is met by taking the total bandwidth required from ongoing calls which have already been admitted to the network and are in progress. Such ongoing calls are, typically, of a lower priority than the new call seeking admission - e.g. the ongoing calls may be non-real time data packet transfers, as compared to the new, higher-priority call such as a VolP call. At an extreme, one or more ongoing calls may be completely dropped if the CAC system is so configured by the network operator according to the policy adopted.
   In contrast to prior art methods there is no cycling through the ongoing lower-priority calls, but a single reduction to the bandwidth of those ongoing calls identified to have their bandwidths reduced. This can be achieved by taking the same absolute amount from each such identified call in a single step. Where necessary, the bandwidth can be further reduced by again calculating the additional amount necessary to make good the bandwidth shortfall amount necessary to admit the new call, and taking another amount of bandwidth from calls identified for this purpose.
   In a preferred embodiment, the apparatus for determining admission of a call to the network includes the module to take bandwidth from ongoing call to accommodate the new call.
   According to a third aspect of the invention, there is provided a node for admitting or refusing a request for transmission on a communications channel, the request made by a call having a minimum bandwidth rate, configured for use with apparatus as claimed.
   The node at which calls are admitted can take the form of a router for operation with a single communications link or channel or a network, and work over wired or wireless systems using WiFi, WiMAX, CDMA and the like.
   According to a fourth aspect of the invention, there is provided a method for admitting or refusing a request for transmission on a communications channel, the request made by a call having a minimum bandwidth rate, including the steps of
- identifying a bandwidth rate at which the call may be admitted at a time when the request is made by the call,
- determining a transmission period required for transmission of the call,
- varying the identified bandwidth rate based on anticipated capacity in the communications channel over the transmission period, and
- admitting the call at the varied bandwidth rate.

In preferred embodiments, the CAC system refers to a lookup table generated by a method wherein data for the last 24 hours of the day is used as a point of reference for the next 24 hours of the day. Thus, the system will be aware that at 09:30 on the previous day, there was a certain level of traffic taking up a certain amount of bandwidth. Based on this, the system will decrease or increase bandwidth initially-allocated to calls seeking admission, based on a prediction that bandwidth availability at 09:30 today will be about the same as yesterday's.

According to a fifth aspect of the present invention, there is provided a method of admitting or refusing a request for transmission on a communications channel, the requested transmission being of a respective one of a plurality of different possible types of transmission, the method comprising
- estimating the expected average number of ongoing transmissions of each type, assuming no requests are refused over a first pre-determined period,
- determining target values of cumulative bandwidth to be consumed by ongoing transmissions of each type,
- determining a target value of individual bandwidth to be allocated to each transmission of a particular type based on the target cumulative bandwidth of each type of transmission and the expected average number of ongoing transmissions of that type, and
- admitting requests for the transmissions at the target value of individual bandwidth where this equals or exceeds the minimum required bandwidth rate.

Preferably, where the target value of individual bandwidth for a particular type of transmission is less than the minimum required bandwidth, a first proportion of requests for that type of transmission are refused while the remainder are allowed at the minimum required bandwidth, the ratio between refused and allowed requests being such that the total amount of bandwidth consumed by all the ongoing transmissions of that type approximates to the target cumulative bandwidth for that type of transmission.

Preferably, each type of transmission has an associated priority level, and the target values for individual and/or cumulative bandwidth of each type of transmission are set to maximise the number of higher-priority transmissions admitted at or above the minimum required bandwidth.

In particular, the approach followed in one embodiment of the present invention is to assign an optimum amount of bandwidth to each transmission type which is allocated to individual transmissions when there is no congestion; when there are expected to be more requested transmissions in total averaging over the first period than can be supported at the respective optimum bandwidths, the target bandwidth values of individual transmissions of the lowest priority type is reduced, provided it does not need to be set below the minimum required bandwidth for that type; if it is not possible to free up enough bandwidth to support all expected requested transmissions on average, during the first period even when all transmissions of the lowest priority type are allowed only at the their minimum required bandwidth, the target value of all transmissions of the second lowest priority type is set to a reduced level (but again not below the minimum required amount) to enable all expected transmissions to be supported. This approach is continued unless/until the number of expected transmissions is so high that even if all transmissions are only allowed to proceed at their minimum required bandwidth, the communications channel would still be unable to support all expected transmissions. At this point, a proportion of the lowest priority transmissions are refused to provide sufficient bandwidth for all higher priority transmissions to proceed at their minimum required bandwidth. If a point is reached where not all higher priority transmissions can be supported at their minimum bandwidth even if all of the lowest priority transmissions are refused, then a proportion of the next lowest priority transmissions are also refused, and so on.

According to a sixth aspect of the invention, there is provided a method of operating a node in a communications network using a method for admitting or refusing a request for transmission as claimed.

According to a further aspect of the invention, there is provided a method of admitting a new call requesting transmission at a required bandwidth rate to a communications channel, the communications channel having a bandwidth capacity of which a portion is occupied by an existing call, the remaining free bandwidth capacity being insufficient to accommodate the new call at the required bandwidth rate, the method including the steps of
- calculating a shortfall amount being a difference between the free bandwidth capacity and the required bandwidth rate,
- obtaining the shortfall amount by reducing the bandwidth occupied by the plurality of existing calls by the shortfall amount,
- allocating the shortfall amount to the new call, and
- admitting the new call at the required bandwidth rate.

The method of admitting or denying a new call admission to the network is usefully deployed with this method of taking bandwidth from ongoing calls to free up bandwidth which is reallocated to the new call.
The invention will now be described, by way of example only, with reference to the following drawings in which:
Figure 1 depicts components of, and data and process flows within, a CAC scheme of the invention;
Figure 2 is a graphical representation of rate adjustment levels;
Figure 3 is a flow chart depicting the process flow of a call admission;
Figure 4 is a flow chart depicting the process flow for obtaining an optimised bandwidth rate;
Figure 5 is a flow chart depicting the process flow for reducing bandwidth rate;
Figure 6 is a flow chart depicting the process flow for increasing bandwidth rate;
Figure 7 depicts the system architecture of a CAC system; and
Figure 8 depicts the integration of the present invention with the CAC system of Figure 7.

The present invention is directed to situations when the network is operating at or near full capacity, where, upon the request of a higher priority call (as defined in the QoS requirements) for admission, elaborate routing measures or reallocation is required to accommodate the later, higher-priority call. The methods and apparatus of the invention may be used with any of the adaptive CAC systems described above, as well as with the system described in the applicant's co-pending application no. GB0621336.7.

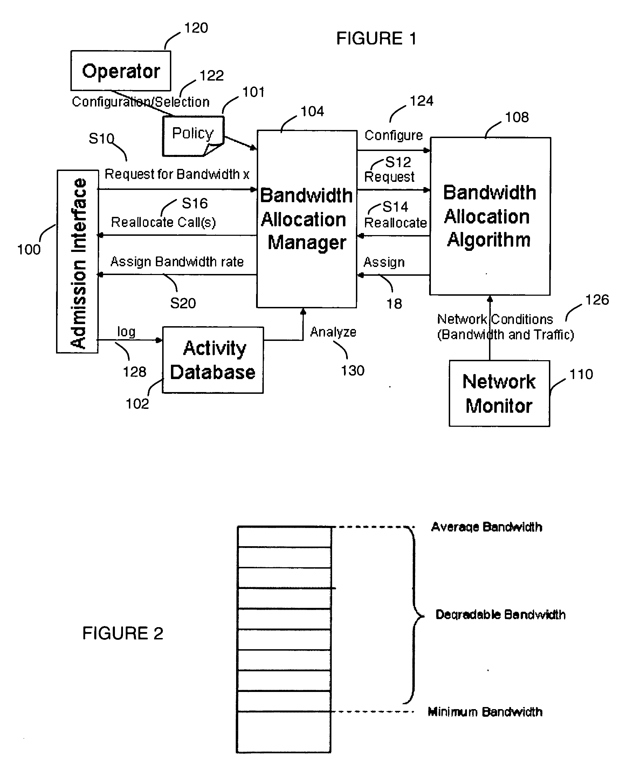

Figure 1 depicts the components of an adaptive scheme incorporating a bandwidth management scheme according to the invention (90), many components of which are common to CAC apparatus in general. This system is typically deployed at the access network level.

A Call Admission Interface (100) is the front end interface which collects information from end users who are requesting admission for their calls to the network at the node or base station. Such call information includes application profiles (e.g. call types such as text, audio, video, file transfers), user profile information (e.g. user data, subscription types), as well as simply logging calls made (e.g. new, terminated, handover), and the network conditions existing at any particular time or when a call is admitted. During operation, the Call Admission Interface performs the further function of determining if the bandwidth rate to be assigned or allocated to a call by the system is within the total available bandwidth, and where necessary making adjustments to the bandwidth to be allocated to the call before admitting the call to the network.

The main function of the Activity Database (102) is to keep track of the call history of the network. Information about calls accepted for admission, call durations, identity of callers, rejected calls, and bandwidth allocated to calls, is logged (arrow 128). Preferably, the information is stored according to e.g. the time of day when the call activity was detected and logged, for access (arrow 130) by the Bandwidth Allocation Manager (104) for analysis.

The Bandwidth Allocation Manager (104) is the main controlling component of the system, and performs the following tasks:
- Implementing (arrow 122) a selected admission policy or configuration (101) selected by the network operator (120) which configures (arrow 124) a Bandwidth Allocation Algorithm (108) setting certain system parameters determining call admission rules and criteria. Admission policies are based on the network operator's requirements and priorities for the CAC system, depending on e.g. network conditions at the time, and are usually set out as statements of requirements. In the present embodiment, there are four system parameters, discussed in greater detail below. By adjusting the system parameters, different policy configurations can be flexibly set for different times and circumstances e.g. under different network conditions, or for different call types. The system parameters can be manually configured by the network operator, or automatically configured by the Bandwidth Allocation Manager based on data in the Activity Database (102).
- Setting time intervals for the implementation of different policy configurations.
- Taking call connection requests received by the Call Admission Interface, checking the request to decide the QoS requirement for bandwidth rate for the particular call type, then passing the request to the Bandwidth Allocation Algorithm which is then configured to run with the QoS settings for the particular call type as determined by the Bandwidth Allocation Manager.
- Reducing bandwidth to be allocated to lower-priority calls to free up bandwidth, where the network is overloaded, and a high priority call subsequently requests admission. The network operator may also choose to reduce the bandwidth rate of high priority calls, to improve the overall performance of the network.
- Assigning the optimised bandwidth rate to the new call.
- Determining or predicting traffic conditions at different time intervals by reference to connection and traffic historical data. This allows for the Bandwidth Allocation Algorithm to be configured according to the applicable policy configuration. The historical data can be provided in the form of databases or lookup tables.

Operating in conjunction with the Broadband Allocation Manager is an allocation enforcement mechanism which, in the present embodiment, operates to prevent individual calls from taking more than their allocation of bandwidth (as allowed by the Bandwidth Allocation Manager) at the expense of other calls obtaining less than their allocation. In the present embodiment this is implemented using a solution from Cisco Systems Inc. known as a Weighted Fair Queuing mechanism (available on many of Cisco's QoS-enabled routers) which is described in greater detail below.

The Bandwidth Allocation Algorithm (108) is the primary tool allowing the network operator to configure the CAC system of the invention. It comprises a series of steps which establishes an at least acceptable, if not optimal, bandwidth rate for admission of different call types according to the applicable QoS requirements based on current and past network conditions. The steps of the algorithm are determined by the system parameters set by the network operator, and are discussed in greater detail below.

The Network Monitor (110) keeps track of network conditions, by collecting network information from the current and neighbouring (e.g. in a mobile cellular network) networks, e.g. list of networks available, operator name, connection charges of each network, and bandwidth availability of each network. This information is accessed (arrow 126) by the algorithm and affects its configuration.

The working of this embodiment of the invention will now be briefly described with reference to the process flows shown in Figure 1. The process typically begins with a call request. In step S10, the caller makes a request for a certain bandwidth rate at the node or base station, which request is considered by the Bandwidth Allocation Algorithm in step S12. The call is allocated its requested bandwidth if there are sufficient resources to do so (steps S14 and S16). However the call may be allocated less bandwidth than was requested in steps S14 and S16. In assessing how much bandwidth to allocate to the requesting call, the Bandwidth Allocation Algorithm as implemented by the Bandwidth Allocation Manager, makes an assessment of current - and future likely - traffic levels and conditions. Bandwidth is then assigned to the call in steps S18 and S20, and admitted to the network.

An example of setting an admission policy or configuration (101) will now be described in connection with the configuration of system parameters within the CAC system. As noted above, there are in the present embodiment four system parameters which the network can adjust to produce a variety of admission policies or configurations suitable for different purposes and conditions.

### 1. Initial Bandwidth Base Rate

This is the starting system bandwidth rate that is to be assigned to any call. In this embodiment, there are three main rates associated with any particular type of call, namely the maximum, average and minimum rate based on the applicable QoS requirements, of which the values in Table 1 are a typical example. These values are taken from C Oliveira, JB Kim, and T Suda "An Adaptive Bandwidth Reservation Scheme for High-speed Multimedia Wireless Networks" IEEE Journal on Selected Area in Communications 1998, vol.16, no. 1.

**Table 1 Quality of Service values**

| *Application Type* | *Bandwidth Requirement* | *Average Bandwidth Requirement* | *Average Connection Duration* | *Priority* |
|---|---|---|---|---|
| Voice service and audio phone | 30 Kbps | 30 Kbps | 3 min | 1 |
| Video phone and video conference | 256 Kbps | 256 Kbps | 5 min | 2 |
| Interactive multimedia and video on demand | 1-6 Mbps | 3 Mbps | 10 min | 3 |
| Email, paging and fax | 5-20 Kbps | 10 Kbps | 30 sec | 4 |
| Remote login and data on demand | 64-512 Kbps | 256 Kbps | 3 min | 5 |
| File transfer and retrieval service | 1-10 Mbps | 5 Mbps | 2 min | 6 |

According to the table, voice/audio calls are the highest-priority applications or calls, and file transfer and retrieval services the lowest. The table also sets out some typical data about bandwidth requirements, as well as the connection durations, of each call type. The connection durations describe the typical transmission time period expected to be required for the call or application type. The network operator can adopt the above values so that calls will initially have e.g. the average bandwidth rate required by their call or application type allocated to them. The network operator can however set and adjust the values of the Bandwidth Base Rate according to other policy requirements and other considerations. For example, in a network with a lot of spare capacity, the Bandwidth Base Rate can be set to the maximum, in a moderately busy network it can be set to an average, else set to the minimum bandwidth if the network is overloaded. The network operator can also choose to set the Bandwidth Base Rate for each of the six application types in Table 1 at maximum/average/minimum rates independently of each other.

### 2. Rate Adjustment

This aspect of the invention enables the CAC scheme of the invention to dynamically reallocate the bandwidth rate of existing calls based on network conditions upon the system's receiving a request for call admission i.e. at runtime.

For example, a video-on-demand (VOD) call requests, or is initially assigned an initial bandwidth rate of 3 Mbps (i.e. the average bandwidth rate required, according to Table 1), the CAC scheme of the invention can, with its rate adjustment capability, can adjust the assigned initial bandwidth of 3 Mbps depending on traffic conditions or the policies configured and adopted by the operator. Thus, the Initial Bandwidth Base Rate assigned to the VOD call can be reduced if a higher-priority voice call subsequently requests admission in an overloaded network. Conversely, the Initial Bandwidth Base Rate can be increased where there is little traffic in the network, allowing for full use of available resources to be made.

This parameter allows the network operator to set different levels, rates and directions of adjustment of bandwidth rates. Figure 2 is a graphical depiction of bandwidth levels between an average bandwidth rate and the minimum bandwidth rate. Each level can be set to represent a difference of e.g. 10 Kbps. The adjustment level can be set to "up" (increase), "down" (reduce), or both. Assuming that the Initial Bandwidth Base Rate is set to average, and the adjustment direction set to "down", a call seeking admission at the average bandwidth rate may have assigned to it a reduced bandwidth rate if the network is busy. The bandwidth rate may be reduced level-by-level, or it may be reduced immediately to the determined bandwidth value, as determined by the Bandwidth Allocation Algorithm.

While the skilled person would realise there to be a variety of ways to carry out the reduction process, one preferred method would be as follows. First, identify how many lower-priority (e.g. non real-time) calls which bandwidth can be reduced. After that, the estimated bandwidth required by the new call is divided by the number of lower-priority calls identified. This method allows for direct reduction of the bandwidth of pre-identified lower priority calls, and reduces the time and resources spent on the reallocation process.

Conventional adaptive CAC schemes use both the aspects of Initial Bandwidth Base Rate and Rate Adjustment to manage the bandwidth allocation process. However, these prior art schemes do not reallocate bandwidth by increasing rates when traffic levels are low. Also, these schemes do not take into account the possibility of future traffic overloading in the network, after the requesting call has been allocated a certain bandwidth rate and admitted. Hence the need in conventional systems for separate and inefficient methods to subsequently reduce bandwidth already allocated to already-admitted and ongoing calls as briefly described above. The present invention seeks to address this shortcoming with the use of the next two system parameters.

### 3. Initial Bandwidth Reduction Rate

In this aspect of the invention, a proportion of the Initial Bandwidth Base Rate is reduced, before the call is admitted at an allocated bandwidth rate. This parameter allows the system to proactively take into account the possibility that the network will operate at or near capacity in the (near) future, so that a condition will arise wherein some if not all of the existing ongoing calls will need to have their bandwidths reallocated downwards, either to improve traffic flows or to admit new calls. By intelligently reducing the bandwidth rate of some of the existing (in some cases low priority) calls at an early stage, reallocation latency is reduced, and the amount of signalling traffic going into the network cut down.

The network operator is able to configure this parameter by deciding what proportion of calls should be proactively reduced, according to the policy adopted. For example, the average bandwidth rate for application type 3 (VOD) is 3 Mbps and the minimum is 1 Mbps. If it is known from historical data and experience that the network will be highly overloaded shortly after the admission of the particular call, the Bandwidth Allocation Manager will proactively assign the new call with a bandwidth rate that is below the average bandwidth rate.

To guard against the possibility of wrongly estimating future traffic levels, a corrective module should preferably be provided as part of the Bandwidth Allocation Algorithm.

Conversely, whenever the bandwidth rate availability increases at the time 1 call is seeking admission (e.g. as other calls are terminated), the bandwidth rate initially intended to be allocated to ongoing calls can be increased so that the new call is admitted at a higher rate. Also, if the traffic level is initially wrongly estimated to be high but turns out to be low, all existing calls will be allocated higher bandwidth according to their priority. By doing this, it helps to improve use of network resources.

### 4. Rate of Reduced Calls

This refers to the percentage of calls (i.e. number of calls within a given time interval) where the Bandwidth Base Rate is first reduced at the amount specified by the Initial Bandwidth Reduction Rate. The network operator can decide to configure the system so that 30% of the total calls within the next two hours will be assigned a bandwidth rate that is reduced by the Initial Bandwidth Reduction Rate. This parameter can be adjusted depending on the applicable policy to allow the Bandwidth Base Rate to be reduced for more or fewer calls.

Upon setting the four system parameters, the network operator has a Bandwidth Allocation Algorithm which may further be specified for use for all traffic, only real-time traffic and/or non real-time traffic, or in some other manner. Different algorithms can be adopted to control admissions to the network under a variety of network conditions or at different time intervals, while taking into account the QoS requirements of each call. This gives the network operator a great deal of flexibility to adopt the call admission algorithm and policy most suitable for the purpose.

After the most suitable Bandwidth Allocation Algorithm is selected, it is applied to the CAC system. There are various way to implement this, including loading it on the CAC system (after the previous algorithm is unloaded) at runtime by swapping modules. This may affect existing calls already admitted into the network, so such existing calls should be adapted to take on board the new rules of the freshly-activated algorithm. The network operator has the option of including, at the point of switching, certain contextually-relevant messages to callers. For example, upon the swap of algorithm modules signifying a switch from peak to off-peak tariffs, the network operator could inform existing callers (e.g. via an audio or pop-up message) about lower connection charges taking effect from then.

With the variety of adjustable parameters available to the network operator, many possible policy configurations can be set in the CAC scheme of the invention. While four system parameters are described above, the skilled person would appreciate that further parameters can be included to allow for even further fine-tuning to allow for very precise configurations to be made.

The admission mechanism described above can be implemented by configuring existing network equipment such as a router or a bridge to support two system requirements: user-defined traffic types or classes, and bandwidth assignment for these traffic classes. Once traffic has been classified into different classes (as shown in Table 1 above), the next step is to schedule and queue the traffic in the router.

Equipment from Cisco Systems, Inc. provides two implementations of weighted fair queuing (WFQ): flow-based WFQ and class-based WFQ. Class-based WFQ apparatus is preferred in the present case for two reasons: bandwidth guarantees for an application are supported, as are user-defined traffic classes. To these can be embedded the algorithm of the present invention, to assign different bandwidth rates to different classes of traffics according to the four system parameters discussed above.

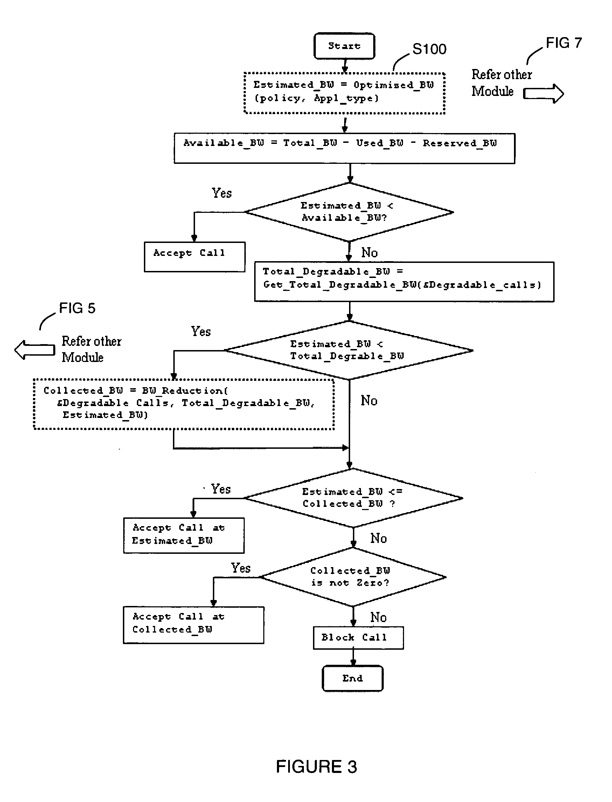

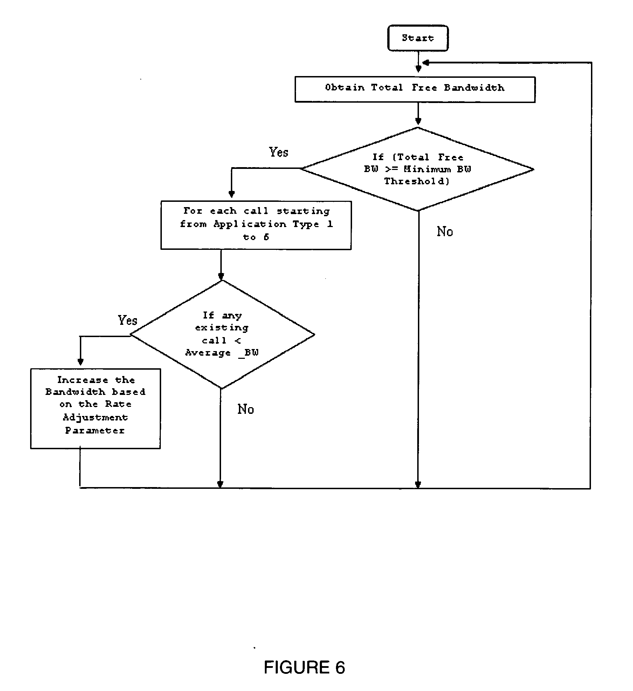

Figures 3 to 6 are flow charts which describe the steps taken by the Bandwidth Allocation Algorithm (108) in response to a call requesting network admission at a node, in an example of an implementation of the invention.

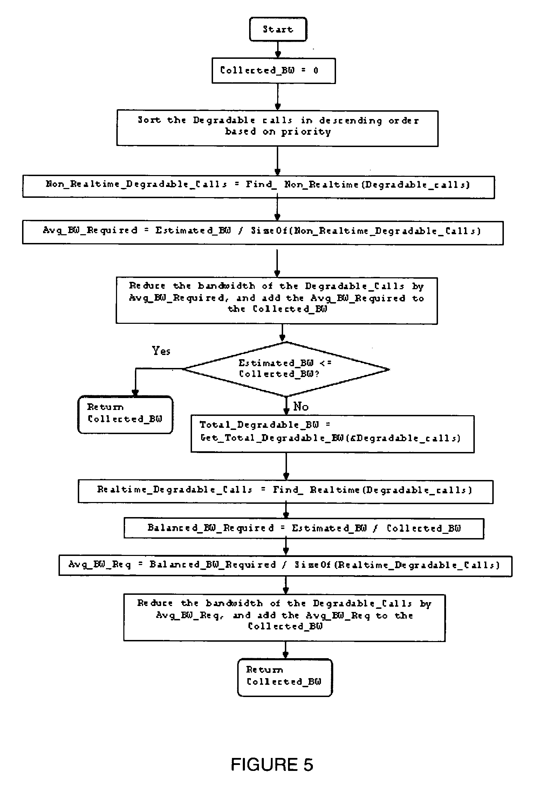

The flow chart of Figure 3 depicts the main process flows of the Bandwidth Allocation Algorithm. It makes use of different modules/functions (such as estimating the bandwidth, and performing bandwidth reduction on existing calls) to complete the admission task. When a new call seeks admission, the system will calculate an estimated, optimised bandwidth rate according to the system policy and the current new call (application) type. The system then decides whether there is enough actual bandwidth to support admission of the call at the estimated bandwidth, or if it should start the process to reduce bandwidth rates as discussed below in connection with Figure 5. If there is still not enough bandwidth available to meet the estimated bandwidth required (after performing the bandwidth reduction), the new call is either admitted (after bandwidth is gathered from degradable calls by the bandwidth reduction process described against Figure 5), or it is rejected.

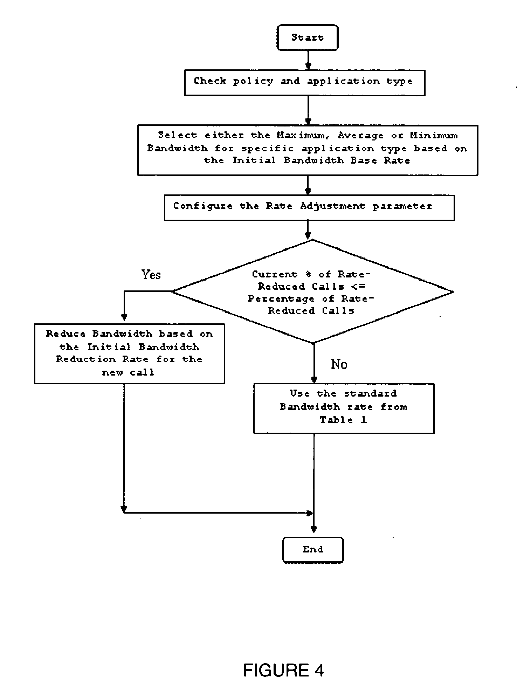

Figure 4 is a flow chart describing the working of the algorithm for obtaining an optimized bandwidth rate. Here, both the system policy and new call (application) type are used to determine the optimized bandwidth rate. The Bandwidth Allocation Algorithm is configured according to the settings of the four system parameters described above.

In the flow of chart of Figure 5, the algorithm for bandwidth reduction operates to first sort all ongoing calls according to their priority. Each is then checked to identify lower priority calls for bandwidth reduction. Bandwidth reduction is first performed on non real-time calls then only if necessary, on real-time calls. The total bandwidth obtained or collected through this process is then returned to the main admission module.

The above three algorithms (Figures 3, 4 and 5) are executed in a single thread with the main objective being to reduce the bandwidth rate of ongoing calls so as to accommodate a new call seeking admission.

An important feature of the present invention is the optimisation of network resources at the node or base station, so there is in parallel apparatus and methods for increasing the bandwidth of ongoing calls where there is excess network capacity. Figure 5 depicts and example of an algorithm for the bandwidth increment module. Here, after the total available (free) bandwidth in the system has been determined, it is then possible to check whether it exceeds the minimum bandwidth threshold. This minimum bandwidth threshold must be at least equal to the bandwidth rate required to serve a call of the lowest priority. For implementation, the threshold must also include the minimum bandwidth reserved to support call handover. Hence, a preferred threshold would be a value that is equal to or greater than the summation of the bandwidth rate of single call with lowest priority and the system reserved bandwidth.

As described above, the historical data referred to allow a prediction to be made about network conditions at a particular time or time period, is stored in the form of a database or a lookup table e.g. in the Activity Database (102). This information is generally static in nature, in the sense that it needs to be manually updated, and depending on how quickly the activity level of the particular network changes, such data may quickly become obsolete.

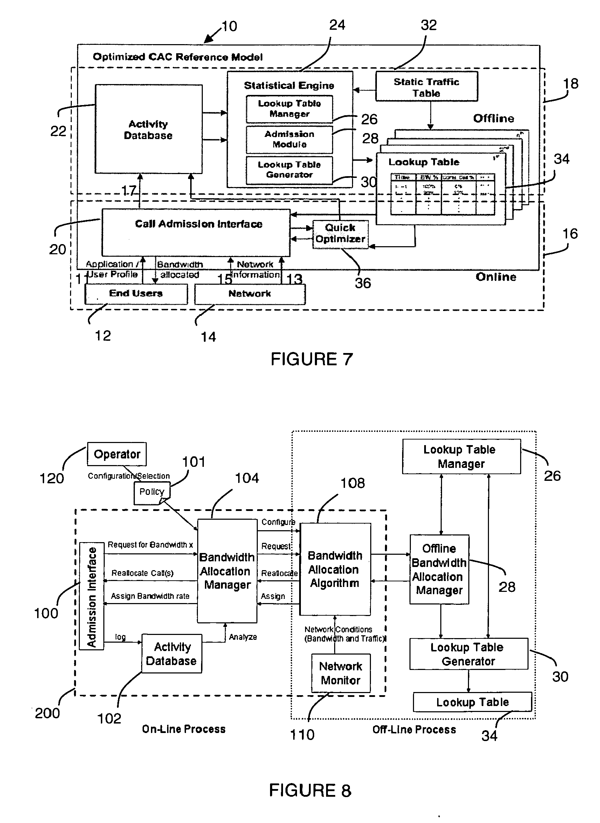

CAC apparatus and methods for generating historic data kept in the form of lookup tables, which data is automatically and periodically refreshed, is described in the applicant's co-pending application no. GB0621336.7, which description is hereby incorporated in its entirety. The present invention is well suited for use with this CAC system, and can in a preferred embodiment, be integrated therewith as shown in Figure 8. Figure 7 depicts components of the adaptive allocative scheme (10) described in the co-pending application (which in this description shall be referred to as the online/offline CAC system). In this scheme, the CAC system refers to a lookup table which contains estimates of network conditions and bandwidth which are likely to exist at e.g. a particular time of day. The lookup table or tables are automatically and periodically updated by the system's taking on board of fresh data about actual network conditions, which data is obtained via the Call Admission Interface (20). In the invention, a statistical engine (24) undertakes the activity of processing actual network condition data to obtain the data for the lookup tables. From Figure 7, it can be seen that the statistical engine (24) is one of the components which operate "offline" (18), which means that the computationally-heavy assessment of network conditions need not be performed before a call is admitted. In short, the online/offline CAC system makes admission decisions based on data about network conditions which are constantly refreshed. In ideal conditions, accurate decisions can be made using data which describes or closely approximates actual network conditions, with minimum admission latency.

Figure 8 shows how the bandwidth management scheme of the present invention (90) can be plugged into and used with the online/offline CAC system (10) of Figure 7. As noted above however, the bandwidth management scheme can be provided as a separate module which may be integrated with any adaptive CAC scheme. In this embodiment, historic data from the lookup tables is fed into the Bandwidth Allocation Algorithm, for reference to determine the likely network conditions at any particular time or time period. Using this information, the CAC system of the present invention can, in a congested network, proactively reduce the Bandwidth Base Rate of calls seeking admission. As noted above, the historic information in the lookup tables are periodically automatically refreshed, unlike the potentially stale data in databases of conventional CAC systems.

In a preferred embodiment, the present invention is integrated with can further be used with an online/offline CAC system which includes a Quick Optimiser. As described in co-pending GB0621336.7, the Quick Optimiser performs the additional step of analysing the data for abnormal or atypical conditions, and then setting and sending an optimised bandwidth rate to the Call Admission Interface.

The skilled person would recognise that a number of variations and alternatives based on the invention are possible to the devices, apparatus, methods, manufacturing methods and materials used. It is possible also to envisage other purposes, aims and environments to which these devices, methods and the like, may be applied. Accordingly, this invention is not limited to the particular set up and applications described herein.

## Claims

1. Apparatus for admitting or refusing a request for transmission on a communications channel, the request made by a call having a minimum bandwidth rate, the apparatus including
- identifying means for identifying a bandwidth rate at which the call may be admitted at a time when the request is made by the call,
- determining means for determining a transmission period required for transmission of the call,
- varying means for varying the identified bandwidth rate based on anticipated capacity in the communications channel over the transmission period, and
- admission means for admitting the call at the varied bandwidth rate.

2. Apparatus according to claim 1 wherein the admission means is further configured to refuse the call if the anticipated capacity over the transmission period is less than the minimum bandwidth rate.

3. Apparatus according to claim 1 or claim 2 wherein the varying means is configured to reduce the identified bandwidth rate based on an anticipated reduced capacity in the communications channel over the transmission period.

4. Apparatus according to any preceding claim further including a database of historical capacity data, and wherein the anticipated capacity in the communications channel over the transmission period is determined by reference to the historical data.

5. Apparatus according to any preceding claim wherein the apparatus is configured for admitting or refusing a request for transmission using a plurality of adjustable system parameters.

6. Apparatus according to claim 5 wherein one of the plurality of system parameters comprises means to select an initial bandwidth base rate to be assigned to the call, wherein the initial bandwidth base rate equals or exceeds the minimum bandwidth requirement.

7. Apparatus according to claim 5 or claim 6 wherein one of the plurality of system parameters comprises means to adjust the initial bandwidth base rate, based on available bandwidth in the channel, and wherein the initial bandwidth base rate can be adjusted up and/or down.

8. Apparatus according to any one of claims 5 to 7 wherein one of the plurality of system parameters comprises means to set a rate of adjustment of the initial bandwidth base rate assigned to the call, based on expected available bandwidth in the channel over the transmission period.

9. Apparatus according to any one of claims 5 to 8 wherein one of the plurality of system parameters comprises means to set a proportion of calls affected by a downward adjustment of the initial bandwidth base rate.

10. Apparatus according to any one of claims 5 to 9 wherein at least one of the plurality of system parameters is automatically set upon selection of an admission policy.

11. Apparatus according to any preceding claim further including means to reallocate bandwidth to the call, by reducing bandwidth of an ongoing call already admitted to the communications channel to free up bandwidth, and allocating the freed up bandwidth to the call.

12. Apparatus according to claim 11 wherein the varying means is further configured to reallocate bandwidth to the call and/or an ongoing call based on an incorrectly anticipated capacity.

13. Apparatus according to any one of claims 4 to 12 wherein the historical data is obtained using a module including
- data obtaining means to obtain historical bandwidth data about a historical call and the network at the time of the historical call, and
- data organisation means to organise the obtained historical bandwidth data to generate a historical reference, wherein the historical reference comprises data including a historical bandwidth allocation estimate, representative of a specified historical time period.

14. A module for reallocating bandwidth to a new call requesting transmission at a required bandwidth rate to a communications channel, the communications channel having a bandwidth capacity of which a portion is occupied by an existing call, the remaining free bandwidth capacity being insufficient to accommodate the new call at the required bandwidth rate, the apparatus including
- calculating means to calculating a shortfall amount being a difference between the free bandwidth capacity and the required bandwidth rate,
- reduction means for obtaining the shortfall amount by making a single reduction of the bandwidth occupied by the existing call by the shortfall amount, and
- reallocation means for allocating the shortfall amount to the new call.

15. A module according to claim 14 wherein the bandwidth capacity is occupied by a plurality of existing calls, and wherein the reduction means is configured to make a single reduction to the bandwidth occupied by each of the plurality of existing calls by the shortfall amount.

16. A module according to claim 14 or claim 15 wherein the existing call is a lower-priority call and the new call is a higher-priority call.

17. A module according to any one of claims 14 to 16 wherein the reduction means further comprises means for terminating the existing call to obtain the shortfall amount.

18. Apparatus according to any one of claims 1 to 13, further including a module of any one of claims 14 to 17.

19. A node for admitting or refusing a request for transmission on a communications channel, the request made by a call having a minimum bandwidth rate, configured for use with apparatus of any one of claims 1 to 13.

20. A node for admitting or refusing a request for transmission on a communications channel, the request made by a call having a minimum bandwidth rate, configured for use with apparatus of claim 18.

21. A method for admitting or refusing a request for transmission on a communications channel, the request made by a call having a minimum bandwidth rate, including the steps of
- identifying a bandwidth rate at which the call may be admitted at a time when the request is made by the call,
- determining a transmission period required for transmission of the call,
- varying the identified bandwidth rate based on anticipated capacity in the communications channel over the transmission period, and
- admitting the call at the varied bandwidth rate.

22. A method according to claim 21 wherein the varying step comprises reducing the identified bandwidth rate based on an anticipated reduced capacity in the communications channel over the transmission period.

23. A method according to claim 21 or claim 22 wherein the varying step comprises reducing the identified bandwidth rate based on an anticipated reduced capacity in the communications channel over the transmission period.

24. A method of according to any one of claims 21 to 23 wherein the anticipated capacity in the communications channel over the transmission period is determined based on historical data.

25. A method according to any one of claims 21 to 24 wherein the admission or refusal of a request for transmission is performed by adjusting a plurality of system parameters.

26. A method according to claim 25 wherein adjusting one of a plurality of system parameters comprises selecting an initial bandwidth base rate to be assigned to the call, wherein the initial bandwidth base rate equals of exceeds the minimum bandwidth requirement.

27. A method according to claim 25 or claim 26 wherein adjusting one of the plurality of system parameters comprises adjusting the initial bandwidth base rate up and/or down, based on available bandwidth in the channel.

28. A method according to any one of claims 25 to 27 wherein adjusting one of the plurality of system parameters comprises setting a rate of adjustment of the initial bandwidth base rate assigned to the call, based on expected available bandwidth in the channel over the transmission period.

29. A method according to any one of claims 25 to 28 wherein adjusting one of the plurality of system parameters comprises setting a proportion of calls affected by a downward adjustment of the initial bandwidth base rate.

30. A method according to any one of claims 21 to 29 including the setting of an admission policy to automatically adjust the plurality of system parameters.

31. A method for admitting or refusing a request for transmission according to any one of claims 24 to 30, further including a method to obtain the historical data, comprising the step of using historical bandwidth data to generate a historical reference including a bandwidth allocation estimate representative of a specified historical time period.

32. A method of operating a node in a communications network using a method for admitting or refusing a request for transmission according to any one of claims 21 to 31.

33. A method of admitting a new call requesting transmission at a required bandwidth rate to a communications channel, the communications channel having a bandwidth capacity of which a portion is occupied by an existing call, the remaining free bandwidth capacity being insufficient to accommodate the new call at the required bandwidth rate,
the method including the steps of
- calculating a shortfall amount being a difference between the free bandwidth capacity and the required bandwidth rate,
- obtaining the shortfall amount by making a single reduction of the bandwidth occupied by the existing call by the shortfall amount,
- allocating the shortfall amount to the new call, and
- admitting the new call at the required bandwidth rate.

34. A method according to claim 33 wherein the bandwidth capacity is occupied by a plurality of existing calls, and wherein the obtaining step comprises making a single reduction to the bandwidth occupied by each of the plurality of existing calls by the shortfall amount..

35. A method according to claim 33 or claim 34 wherein the existing call is a lower-priority call and the new call is a higher-priority call.

36. A method according to any one of claims 33 to 35 wherein the step of obtaining the shortfall amount further comprises terminating the existing call.

37. A method according to any one of claims 21 to 31, further including the steps of the method of any one of claims 33 to 36.
